# EUROPÄISCHE PATENTSCHRIFT

(11) **EP 2 484 058 B1**
(45) Veröffentlichungstag und Bekanntmachung des Hinweises auf die Patenterteilung: **31.12.2014**
(21) Anmeldenummer: 11711819.0
(22) Anmeldetag: 23.03.2011
(51) Int. Cl.: H04L 12/42, H04L 29/12

(54) **ADRESSIERUNGSVERFAHREN UND KOMMUNIKATIONSNETZWERK MIT EINEM SOLCHEN ADRESSIERUNGSVERFAHREN**
ADDRESSING METHOD AND COMMUNICATION NETWORK WITH SUCH AN ADDRESSING METHOD
PROCÉDÉ D'ADRESSAGE ET RÉSEAU DE COMMUNICATION UTILISANT UN TEL PROCÉDÉ D'ADRESSAGE

(30) Priorität: 30.03.2010 DE 102010003448
(43) Veröffentlichungstag der Anmeldung: 08.08.2012
(73) Patentinhaber: Beckhoff Automation GmbH, 33415 Verl (DE)
(72) Erfinder: BÜTTNER, Holger, 12157 Berlin (DE); SACHS, Jens, 32469 Petershagen (DE)
(74) Vertreter: Patentanwaltskanzlei WILHELM & BECK
(86) Internationale Anmeldenummer: PCT/EP2011/054458
(87) Internationale Veröffentlichungsnummer: WO 2011/120856

(56) Entgegenhaltungen:
- EP-A2- 0 290 934
- EP-A2- 0 436 932
- DE-A1- 19 856 616

## Beschreibung

Die Erfindung betrifft ein Verfahren zum Abfragen von Teilnehmerkennungen in einem Kommunikationsnetzwerk mit mehreren Teilnehmern, die an einem ringförmigen Übertragungsweg angeschlossen sind. Ferner betrifft die Erfindung ein Ringbus-Kommunikationsnetzwerk mit einem Konfigurationsteilnehmer und weiteren am Ringbus angeschlossenen Teilnehmern.

Moderne Konzepte der Industrieautomation, d.h. der Steuerung und Überwachung von technischen Prozessen mit Hilfe von Software, beruhen auf der Idee einer zentralen Steuerung mit verteilter Sensor-/Aktorebene. Die Teilnehmer kommunizieren dabei untereinander und mit übergeordneten Systemen über lokale Kommunikationsnetzwerke, sogenannte Local Area Networks (LANs). In der Industrieautomation eingesetzte LANs sind in der Regel als sogenannte Master-Slave-Kommunikationsnetzwerke ausgelegt, bei denen Master-Teilnehmer die Steuerebene und Slave-Teilnehmer die Sensor-/Aktorebene bilden.

Eine bevorzugte Topologie bei der Auslegung der LANs ist dabei die Ringtopologie, bei der die Teilnehmer über zwei Punktverbindungen miteinander verbunden sind, so dass sich ein geschlossener Ring bildet. Solche Ringbussysteme verhindern automatisch die Kollision umlaufender Datenpakete, sind gut skalierbar und leicht programmierbar. Bei Ringbussystemen ist die Netzwerkkommunikation zudem deterministisch und alle Teilnehmer haben gleiche Zugriffsmöglichkeiten.

Zentrale Anforderung an LANs beim Einsatz in der Industrieautomation ist die sichere und zuverlässige Datenübertragung. Beim Einsatz von LANs zum Steuern von Maschinen muss sichergestellt sein, dass dann, wenn eine Maschinenkomponente ausfällt, keine Gefahr für Mensch und Umwelt ausgeht. LANs in der Industrieautomation, im Weiteren auch als Automatisierungsnetzwerke bezeichnet, arbeiten deshalb in der Regel nach dem sogenannten Fail-Safe-Prinzip, gemäß dem das Automatisierungsnetzwerk beim Ausfall wichtiger Komponenten in einen sicheren Zustand übergeht. Die Aufgabe der Automatisierungsrechner im Automatisierungsnetzwerk d. h. der Master-Teilnehmer beim Ausführen von sicherheitsrelevanten Steuerfunktionen nach dem Fail-Safe-Prinzip ist dabei, die Prozesssignale zum Ausführen der Steuerfunktionen aktuell und unverfälscht zu verarbeiten und den Sensoren/Aktoren des Automatisierungsnetzwerkes, d.h. den Slave-Teilnehmern, immer einen sicheren Prozesszustand anzuzeigen.

Wichtige Voraussetzung für eine sichere und zuverlässige Kommunikation, insbesondere auch in Automatisierungsnetzwerken, ist, dass immer der richtige Slave-Teilnehmer angesprochen wird. Den Slave-Teilnehmern wird deshalb eine Kennung, in der Regel eine Adresse, zugewiesen, über die sie eindeutig identifizierbar sind. Die Teilnehmeradressen sind dann zugleich auch in den auszuführenden Steuerprogrammen, die auf den Master-Teilnehmern im Automatisierungsnetzwerk laufen, gespeichert. Die Einstellung der Teilnehmeradressen ist jedoch in der Regel umständlich und fehleranfällig. Herkömmlicherweise wird die Adresseneinstellung bei den einzelnen Teilnehmern mit Hilfe von Adressauswahlschaltern vorgenommen. Die eingestellten Teilnehmeradressen müssen dann zu den Master-Teilnehmern, die die Steuerprogramme ausführen, übertragen werden. Hierbei besteht die Gefahr einer falschen Adresseneingabe bzw. Adressenänderung, was insbesondere bei sicherheitsrelevanten Teilnehmern ein hohes Risiko birgt. Es ist daher ein hoher organisatorischer Aufwand zur Gewährleistung einer zuverlässigen Adresseneingabe notwendig.

Um die Einstellung der Teilnehmeradressen, insbesondere in Automatisierungsnetzwerken zu vereinfachen, werden in jüngster Zeit Verfahren zur Einstellung von Adressen per Software eingesetzt. So wird in der DE 10 2008 037 093 A1 ein Verfahren zur automatischen Adressierung von Teilnehmern in einem Kommunikationsnetzwerk vorgeschlagen, bei dem die Teilnehmer über einen gemeinsamen Bus an einen Konfigurationsteilnehmer angeschlossen sind, der die Adressenzuordnung durchführt, indem der Konfigurationsteilnehmer ein Einstellsignal an einen ersten nachgeordneten Teilnehmer sendet, der sich daraufhin eine erste zu vergebende Adresse zuordnet. Dieser Teilnehmer sendet dann die zugeordneten Adressen in Form eines modulierten Ausgangssignals an den nächsten Teilnehmer, der sich dann die zweite zu vergebende Adresse zuordnet. Dieses Verfahren wird dann so lange weitergeführt, bis der letzte Teilnehmer am Bus sich eine Adresse zugeordnet hat. Bei dieser Vorgehensweise besteht jedoch die Gefahr, dass sich ein Teilnehmer aufgrund eines Programmfehlers eine falsche Adresse zuordnet, wobei sich dieser Fehler dann im gesamten Automatisierungsnetzwerk fortpflanzt.

Aus der DE 37 36 081 A1 ist ein weiteres automatisches Verfahren zur Adresseneinstellung bei Teilnehmern in einem Kommunikationsnetz bekannt, bei dem die Adressen von einem Konfigurationsteilnehmer zugewiesen werden. Der Konfigurationsteilnehmer fragt die Adressen dann wieder von dem Teilnehmer ab, um zu überprüfen, ob auch die richtige Adresse eingestellt ist. Auch bei dieser Vorgehensweise besteht jedoch das Problem, dass aufgrund von Übertragungsfehlern die falsche Adresse eingestellt bzw. gemeldet wird.

Aus der EP 0 290 934 A ist ein Verfahren und ein Kommunikationsnetz mit den Merkmalen des Oberbegriffs des Anspruchs 1 bekannt.

Aufgabe der Erfindung ist es, ein Verfahren und ein ringförmiges Kommunikationsnetz, auf dem ein solches Verfahren läuft, bereitzustellen, mit dem sich zuverlässig und sicher Teilnehmerkennungen im ringförmigen Kommunikationsnetz abfragen lassen.

Die Aufgabe der Erfindung wird durch ein Verfahren gemäß Anspruch 1 und ein Kommunikationsnetzwerk gemäß Anspruch 10 gelöst. Bevorzugte Weiterbildungen sind in den abhängigen Ansprüchen angegeben.

Erfindungsgemäß wird zum Abfragen von Teilnehmerkennungen in einem Ringbus-Kommunikationsnetz ein erstes Telegramm auf den ringförmigen Übertragungsweg ausgegeben, das eine Abfolge von Telegrammfeldern aufweist, wobei den Teilnehmern am ringförmigen Übertragungsweg jeweils ein Telegrammfeld zum Eintragen ihrer Teilnehmerkennungen zugeordnet ist. Die Teilnehmer am Übertragungsweg prüfen beim Durchlauf des ersten Telegramms, ob das dem Teilnehmer zugeordnete Teilnehmerkennungsfeld frei ist. Bei Feststellen eines freien Teilnehmerkennungsfeldes trägt der Teilnehmer seine Teilnehmerkennung in das freie Teilnehmerkennungsfeld ein. Anschließend wird ein zweites Telegramm auf dem ringförmigen Übertragungsweg ausgegeben, das die Teilnehmerkennungsfelder des ersten Telegramms nach dem Umlauf auf dem ringförmigen Übertragungsweg enthält. Das erste und das zweite Telegramm werden von einem Konfigurationsteilnehmer beim Initialisieren des Kommunikationsnetzwerkes auf den ringförmigen Übertragungsweg ausgegeben.

Mit der erfindungsgemäßen Vorgehensweise wird gewährleistet, dass in einem Ringbus-Kommunikationsnetzwerk auf einfache Weise sicher und zuverlässig Teilnehmerkennungen übertragen werden können. Die erfindungsgemäße Vorgehensweise eignet sich deshalb insbesondere zum Einsatz im Rahmen einer Sicherheitssteuerung in einem Automatisierungsnetzwerk, um Teilnehmerkennungen, d. h. in der Regel Adressen sicherheitsrelevanter Teilnehmer, zur Sicherheitssteuerung zu übertragen. Durch den Umlauf zweier Telegramme kann gewährleistet werden, dass die Sicherheitssteuerung, die sich an einer beliebigen Stelle im Übertragungsweg befinden kann, zuverlässig die Adressen aller sicherheitsrelevanter Teilnehmer erhält. Der beim Eintragen der Teilnehmerkennung in die Telegramme ausgeführte Prüfvorgang durch den Teilnehmer sorgt dafür, dass Fehler bei der Adressenübertragung vermieden werden.

Gemäß einer bevorzugten Ausführungsform weist einer der Teilnehmer am Ringbus-Kommunikationsnetzwerk eine Liste von Teilnehmerkennungen auf, wobei dieser Teilnehmer in der Regel ein Master-Teilnehmer ist. Dann wird folgende Vorgehensweise durchgeführt: Jeder Teilnehmer trägt bei Feststellen eines belegten Teilnehmerkennungsfeldes im ersten Telegramm eine Fehlerkennung in das dem Teilnehmer zugeordnete Teilnehmerkennungsfeld des ersten Telegramms ein. Beim Durchlauf des zweiten Telegramms prüft jeder Teilnehmer, ob das dem Teilnehmer zugeordnete Teilnehmerkennungsfeld seine Teilnehmerkennung enthält. Bei Feststellen eines Fehlers trägt der Teilnehmer eine Fehlerkennung in das dem Teilnehmer zugeordnete Teilnehmerkennungsfeld des zweiten Telegramms ein. Ferner wird ein drittes Telegramm auf den ringförmigen Übertragungsweg ausgegeben, das die Telegrammfelder des zweiten Telegramms nach dem Umlauf auf dem ringförmigen Übertragungsweg enthält, wobei der eine Liste von Teilnehmerkennungen aufweisende Teilnehmer beim Durchlauf des dritten Telegramms die im dritten Telegramm enthaltenen Teilnehmerkennungsfelder einliest und mit der Liste von Teilnehmerkennungen vergleicht.

Alternativ kann auch folgende Vorgehensweise durchgeführt werden: Jeder Teilnehmer trägt bei Feststellen eines belegten Teilnehmerkennungsfeldes im ersten Telegramm beim Durchlauf des zweiten Telegramms eine Fehlerkennung in das dem Teilnehmer zugeordnete Teilnehmerkennungsfeld des zweiten Telegramms ein und prüft, ob das dem Teilnehmer zugeordnete Teilnehmerkennungsfeld seine Teilnehmerkennung enthält. Ein drittes Telegramm wird auf den ringförmigen Übertragungsweg ausgeben, das die Telegrammfelder des zweiten Telegramms nach dem Umlauf auf dem ringförmigen Übertragungsweg enthält. Jeder Teilnehmer trägt dann bei Feststellen eines Fehlers im zweiten Telegramm beim Durchlauf des dritten Telegramms eine Fehlerkennung in das dem Teilnehmer zugeordnete Teilnehmerkennungsfeld des dritten Telegramms ein. Ferner wird ein viertes Telegramm auf den ringförmigen Übertragungsweg ausgegeben, das die Telegrammfelder des dritten Telegramms nach dem Umlauf auf dem ringförmigen Übertragungsweg enthält, wobei der eine Liste von Teilnehmerkennungen aufweisende Teilnehmer beim Durchlauf des vierten Telegramms die im vierten Telegramm enthaltenen Teilnehmerkennungsfelder einliest und mit der Liste von Teilnehmerkennungen vergleicht.

Das dritte bzw. vierte Telegramm, das dem umgelaufenen zweiten bzw. dritten Telegramm entspricht, gewährleistet, dass der Master-Teilnehmer immer ein vollständig ausgefülltes und geprüftes Telegramm sowohl bezogen auf Teilnehmerkennungen als auch auf Fehlerkennungen auch dann erhält, wenn die Teilnehmer in Telegrammumlaufrichtung nach dem Master-Teilnehmer angeordnet sind. Die weiteren Prüfvorgänge durch die Teilnehmer sorgen dafür, dass Fehler bei der Adressenübertragung zuverlässig entdeckt werden.

Gemäß einer weiteren bevorzugten Ausführungsform prüfen die Teilnehmer beim Durchlauf des ersten Telegramms weiter, ob vor dem dem Teilnehmer zugeordneten Teilnehmerkennungsfeld angeordnete Teilnehmerkennungsfelder jeweils eine Teilnehmerkennung enthalten und ob nach dem dem Teilnehmer zugeordneten Teilnehmerkennungsfeld angeordnete Teilnehmerkennungsfelder frei sind. Bei Feststellen eines Fehlers trägt der Teilnehmer dann eine Fehlerkennung in das dem Teilnehmer zugeordnete Teilnehmerkennungsfeld des ersten oder alternativ des zweiten Telegramms ein. Mit dieser zusätzlichen Überprüfung wird gewährleistet, dass die Teilnehmer ihre Teilnehmerkennung immer nur in das dem Teilnehmer zugeordnete Teilnehmerkennungsfeld eintragen, wodurch sich eine erhöhte Sicherheit bei der Datenübertragung erreichen lässt.

Gemäß einer weiteren bevorzugten Ausführungsform umfasst die Teilnehmerkennung eine Serienkennung des Teilnehmers. Die Serienkennung macht den Teilnehmer eindeutig identifizierbar und es ist deshalb nicht erforderlich, in den Teilnehmern z. B. mit Hilfe eines Adressauswahlschalters eine zusätzliche Teilnehmerkennung manuell einzustellen. Der Teilnehmer besitzt eine im Kommunikationsnetzwerk eindeutige Adresse bereits durch die ihm automatisch zugeordnete Serienkennung. Diese Vorgehensweise vereinfacht die Adressenzuweisung zu dem Teilnehmer wesentlich und sorgt zudem für eine erhöhte Sicherheit, da die Adressen automatisch ohne zusätzliche manuelle Einstellung vergeben werden.

Gemäß einer weiteren bevorzugten Ausführungsform erhält jeder Teilnehmer eine Information über seine Position am ringförmigen Übertragungsweg bezogen auf die Anordnung der weiteren Teilnehmer am Übertragungsweg und die Telegrammumlaufrichtung. Diese Information wird dabei vorzugsweise entweder mit einem dem ersten Telegramm vorausgehenden zusätzlichen Telegramm übertragen, oder in einem Kopfbereich des ersten Telegramms. Mit dieser Vorgehensweise wird den Teilnehmern am ringförmigen Übertragungsweg auf einfache Weise mitgeteilt, welches Teilnehmerkennungsfeld im ersten Telegramm dem jeweiligen Teilnehmer zugeordnet ist.

Gemäß einer weiteren bevorzugten Ausführungsform ist den auf dem ringförmigen Übertragungsweg umlaufenden Telegrammen jeweils eine eindeutige Telegrammkennung zugeordnet. Diese Vorgehensweise sorgt für eine erhöhte Sicherheit bei der Teilnehmerkennungsabfrage, da durch die Telegrammkennung gewährleistet wird, dass die Telegramme eindeutig identifizierbar sind, sodass Verwechslungen zwischen den Telegrammen ausgeschlossen werden können.

Gemäß einer weiteren bevorzugten Ausführungsform weisen die auf dem ringförmigen Übertragungsweg ausgegebenen Telegramme jeweils ein Prüffeld auf, wobei die Teilnehmer beim Eintragen der Teilnehmerkennung bzw. alternativ der Fehlerkennung eine Berechnung eines Prüfwertes für das Telegramm durchführen und in das entsprechende Prüffeld eintragen. Mit dieser Vorgehensweise wird eine erhöhte Fehlersicherheit für die Telegramme erreicht. Mit dem zusätzlichen Prüffeld kann nach Übertragung der Daten festgestellt werden, ob eine unverfälschte Datenübertragung stattgefunden hat.

Gemäß einer weiteren bevorzugten Ausführungsform ist wenigstens ein Teilnehmer am ringförmigen Übertragungsweg eine Einstelleinrichtung, die einen Einstellwert als Teilnehmerkennung in das dem Teilnehmer zugeordnete Teilnehmerkennungsfeld des ersten Telegramms einträgt. Mit dieser Vorgehensweise besteht die Möglichkeit, zusätzlich oder alternativ zu einer sicheren Übertragung von Teilnehmerkennungen auch eine sichere Übertragung von Einstellwerten vorzunehmen. Mit diesen Einstellwerten kann z. B. im Master-Teilnehmer festgelegt werden, welcher Modus des auszuführenden Steuerprogramms verwendet werden soll, falls das Steuerprogramm verschiedene Varianten, z. B. einen Sicherheitsmodus und einen Standardmodus, aufweist. Grundsätzlich besteht auch die Möglichkeit die Übertragung von Einstellwerten unabhängig von Teilnehmerkennungen vorzunehmen.

Die Erfindung wird anhand der beigefügten Zeichnungen näher erläutert.

Es zeigen
Figur 1 schematisch eine Ausführungsform eines erfindungsgemäßen Kommunikationsnetzwerkes bei Verarbeitung eines ersten Telegramms,
Figur 2 das in Figur 1 gezeigte Kommunikationsnetzwerk bei Verarbeitung eines zweiten Telegramms,
Figur 3 das in Figur 1 gezeigte Kommunikationsnetzwerk bei Verarbeitung eines dritten Telegramms, und
Figur 4 das in Figur 1 gezeigte Kommunikationsnetzwerk bei Verarbeitung eines modifizierten ersten Telegramms.

Lokale Kommunikationsnetze, sogenannte Local Area Networks (LANs) ermöglichen es, auf einfache Weise Daten und/oder Ressourcen zwischen Teilnehmern auszutauschen und gemeinsam zu nutzen. Solche LANs werden auch zunehmend in der Industrieautomation, d. h. der Steuerung und Überwachung von technischen Prozessen mit Hilfe von Software eingesetzt. Das Ethernet-Konzept ist dabei der am weitesten verbreitete Kommunikationsstandard in LANs. Mit der Ethernet-Technologie lassen sich aktuelle Datenpakete, im Weiteren auch als Telegramme bezeichnet, mit einer Länge von 1500 Bytes mit einer Übertragungsrate bis zu 10 GBit/s übertragen. Eine mögliche Netzwerktopologie für LANs ist die Ringvernetzung. Bei der Ringtopologie sind die Teilnehmer am Kommunikationsnetz über Zwei-Punktverbindungen gekoppelt, sodass ein geschlossener Ring entsteht. Die Telegramme werden von Teilnehmer zu Teilnehmer weitergeleitet, bis der im Datenpaket adressierte Teilnehmer erreicht ist. Der Ringbus wird als Netzwerktopologie bevorzugt auch in der Industrieautomation eingesetzt.

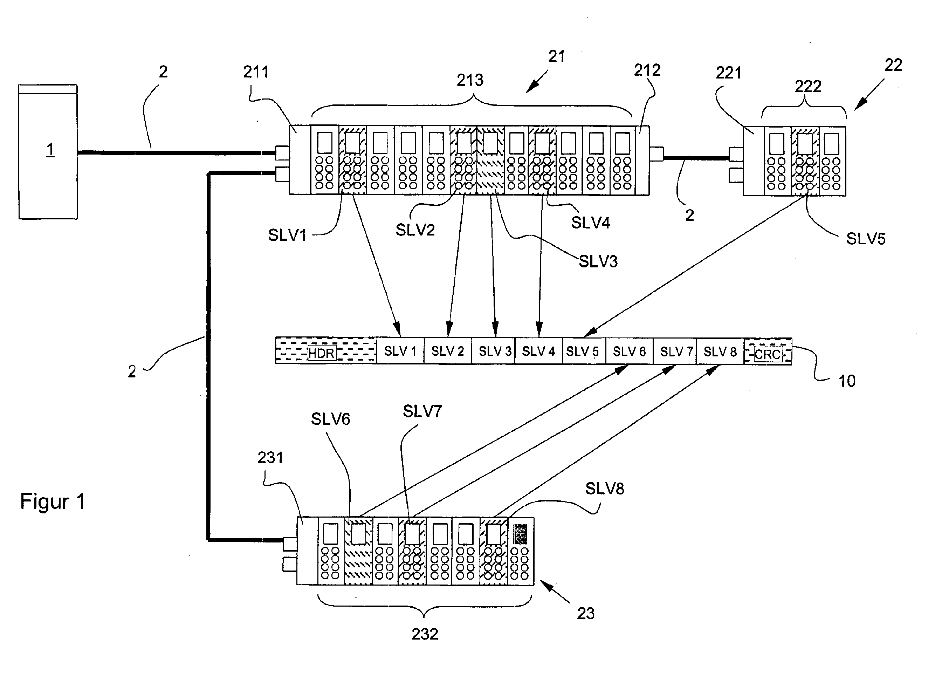

Figur 1 zeigt schematisch ein Ringbus-Kommunikationsnetzwerk zum Einsatz in der Industrieautomation. Solche Automatisierungsnetzwerke, oft auch als Feldbussysteme bezeichnet, dienen zum dezentralen Anschluss von Sensoren und Aktoren an eine Steuerung. Feldbussysteme sind dabei häufig als Master-Slave-Kommunikationsnetzwerke organisiert, bei denen Master-Teilnehmer die Steuerebene und Slave-Teilnehmer die Sensor-Aktor-Ebene darstellen. Die Master-Teilnehmer haben dabei ein aktives Zugriffsrecht auf das Kommunikationsnetz. Die Slave-Teilnehmer dagegen können im Kommunikationsnetz nur aktiv werden, wenn sie von einem Master-Teilnehmer gefragt worden sind.

Das in Figur 1 gezeigte Feldbussystem ist in Form eines Busklemmensystems ausgebildet und weist einen Steuerungsrechner 1 auf, der über einen Datenübertragungsweg 2, z. B. ein Twisted-Pair-Kabel, ein Lichtleiterkabel oder auch eine Funkverbindung, mit drei Busstationen 21, 22, 23 verbunden ist. Die Busstationen 21, 22, 23 sind wieder untereinander über den Datenübertragungsweg 2 zusammengeschaltet. Jede Busstation 21, 22, 23 setzt sich aus Buskoppler und Busklemmen zusammen, die vorzugsweise auf einer Trageschiene angeordnet sind. Die Buskoppler bilden die Kommunikationsschnittstelle zur übergeordneten Steuerung. Die Busklemmen sind mit den Sensoren/Aktoren (hier nicht dargestellt) verbunden. In der in Figur 1 dargestellten Ausführungsform weist die Busstation 21 zwei Buskoppler 211, 212 auf, zwischen denen zwölf Busklemmen 213 angeordnet sind. Die zweite Busstation 22 umfasst einen Buskoppler 221 und drei Busklemmen 222. Die dritte Busstation 23 setzt sich aus einem Buskoppler 231 und acht Busklemmen 232 zusammen.

Der Steuerungsrechner 1 sowie die drei Busstationen 21, 22, 23 bzw. die Buskoppler und Busklemmen in den drei Busstationen sind dabei durch den Datenübertragungsweg 2 bzw. über die interne Verbindung in den Busstationen seriell in Form eines Ringbuses miteinander verschaltet. Ein Telegramm läuft deshalb, wenn von dem Steuerungsrechner 1 ausgegeben, über den Übertragungsweg 2 zur ersten Busstation 21, wobei das Telegramm in der ersten Busstation 21 vom Buskoppler 221 empfangen und über die interne Verbindung dann von der einen Busklemme 213 zur nächsten weitergeleitet wird. Der zweite Buskoppler 212 am anderen Ende der ersten Busstation überträgt das Telegramm nach Durchlauf durch die erste Busstation 21 dann über den Übertragungsweg 2 zur zweiten Busstation 22, wobei der Buskoppler 221 der zweiten Busstation 22 das Telegramm intern an die nachgeordneten Busklemmen 222 weiterleitet. Nach Durchlauf durch alle Busklemmen 222 der zweiten Busstation 22 leitet der Buskoppler 221 der zweiten Busstation 22 das Telegramm dann über die beiden Buskoppler 212, 211 der ersten Busstation 21 weiter an die dritte Busstation 23, deren Buskoppler 231 das Telegramm dann intern an die nachgeordneten Busklemmen 232 weiterreicht. Nach Durchlauf aller Busklemmen 232 der dritten Busstation 23 wird das Telegramm über den Buskoppler 231 der dritten Busstation 23, über den ersten Buskoppler 211 der ersten Busstation 21 auf den Steuerungsrechner 1 rückübertragen. Alternativ zu dem in Figur 1 gezeigten Busklemmensystem besteht natürlich die Möglichkeit, die einzelnen Teilnehmer in einem Kommunikationsnetzwerk in beliebiger Weise miteinander zu verkoppeln, wobei die Teilnehmer jedoch immer seriell hintereinander geschaltet sind und einen geschlossenen Übertragungsring bilden.

In Automatisierungsnetzwerken zum Steuern von Maschinen muss grundsätzlich sichergestellt werden, dass von Fehlern, die im Automatisierungsnetzwerk auftreten, keine Gefahr für Mensch und Umwelt ausgeht. Wesentliche Anforderung an das Automatisierungsnetzwerk beim Ausführen von sicherheitsrelevanten Steuerungsfunktionen ist, dass die Prozessdaten von Sensoren beim Ausführen der sicherheitsrelevanten Steuerungsfunktionen aktuell und unverfälscht verarbeitet werden und den Aktoren immer ein sicherer Prozesszustand angezeigt wird.

Im Allgemeinen sind nicht alle Teilnehmer im Automatisierungsnetzwerk sicherheitsrelevant, sodass im Automatisierungsnetzwerk in der Regel ein oder mehrere spezielle Sicherheitsbereiche ausgebildet sind. Bei dem in Figur 1 dargestellten Automatisierungsnetzwerk in Form eines Busklemmensystems sind zwei Sicherheitsbereiche ausgebildet, wobei ein erster Sicherheitsbereich durch einen Sicherheitsmaster SLV3 und sicherheitsrelevante Slave-Teilnehmer SLV1, SLV2, SLV4 in der ersten Busstation 21 und dem sicherheitsrelevanten Slave-Teilnehmer SLV5 in der zweiten Busstation 22 gebildet wird. Die Teilnehmer des ersten Sicherheitsbereichs sind dabei so angeordnet, dass im Busklemmensystem ausgehend vom Steuerungsrechner 1 in Telegrammlaufrichtung die sicherheitsrelevanten Slave-Teilnehmer SLV1, SLV2 vor dem Sicherheitsmaster SLV3, die sicherheitsrelevanten Slave-Teilnehmer SLV4, SLV5 nach dem Sicherheitsmaster SLV3 angeordnet sind. Bei dem in Figur 1 gezeigten Automatisierungsnetzwerk besteht ein zweiter Sicherheitsbereich, der durch den in der dritten Busstation 23 angeordneten Sicherheitsmaster SLV6 und die beiden sicherheitsrelevanten Slave-Teilnehmer SLV7, SLV8 gebildet wird, wobei die sicherheitsrelevanten Slave-Teilnehmer SLV7, SLV8 im Busklemmensystem bezogen auf den Steuerungsrechner 1 und die Telegrammumlaufrichtung dem Sicherheitsmaster SLV6 nachgeordnet sind.

Zentrale Anforderung an Automatisierungssysteme ist es, dass die Telegramme zwischen den Teilnehmern am Kommunikationsnetzwerk fehlerfrei und unverfälscht übertragen werden. Die Adressierung der Teilnehmer erfolgt dabei über Teilnehmerkennungen, im Weiteren auch als Adressen bezeichnet, die im Kommunikationsnetzwerk eindeutig sein müssen. Dies gilt insbesondere für die sicherheitsrelevanten Teilnehmer in den Sicherheitssteuerungen. Die erfindungsgemäße Vorgehensweise bei einer automatischen Adressierung, und insbesondere bei der Abfrage von Teilnehmerkennungen wird im Weiteren speziell für Sicherheitssteuerungen und deren sicherheitsrelevante Teilnehmer dargestellt. Die nachfolgend dargestellte automatische Adressierung bzw. Abfrage von Teilnehmerkennungen lässt sich jedoch in beliebigen Ringbus-Kommunikationsnetzwerken nicht beschränkt auf sicherheitsrelevante Teilnehmer einsetzen.

In den Sicherheitssteuerungen, d. h. in der in Fig. 1 gezeigten Ausführungsform in den Sicherheitsmastern SLV3, SLV6, sind die Sicherheitsadressen der sicherheitsrelevanten Slave-Teilnehmer, mit denen kommuniziert werden soll, gespeichert. Das Sicherheitsprogramm, das auf den jeweiligen Sicherheitssteuerungen, d. h. in der in Fig. 1 gezeigten Ausführungsform in den Sicherheitsmastern SLV3, SLV6, läuft, enthält die Sicherheitsadresse der zugehörigen Sicherheitssteuerung, also die der Sicherheitsmaster SLV3, SLV6.

Die Einstellung von Sicherheitsadressen in einem Automatisierungsnetzwerk ist in der Regel umständlich und fehleranfällig. Dies gilt sowohl für die Einstellung der Sicherheitsadressen in den einzelnen sicherheitsrelevanten Teilnehmern als auch für den Austausch der Sicherheitsadressen im Rahmen der Initialisierung des Automatisierungsnetzwerkes. Um die Einstellung der Teilnehmerkennung in einem Kommunikationsnetzwerk insbesondere der Sicherheitsadressen der sicherheitsrelevanten Teilnehmer in einem Automatisierungsnetzwerk zu vereinfachen, wird als Teilnehmerkennung die Serienkennung des entsprechenden Teilnehmers genutzt. Die Serienkennung eines Teilnehmers, in der Regel bestehend aus einer Herstellerkennung, einer Gerätetypkennung und einer Seriennummer, ist weltweit eindeutig und deshalb zur Verwendung insbesondere auch als Sicherheitsadresse geeignet. Mit einer Telegrammfolge bestehend aus drei Telegrammen werden die Sicherheitsadressen der sicherheitsrelevanten Slave-Teilnehmer zu den Sicherheitsmastern übertragen. Die nachfolgend dargestellte Adressenübertragung eignet sich auch für die Übertragung beliebiger Teilnehmerkennungen. Ferner besteht die Möglichkeit statt der Teilnehmerkennung auch andere oder zusätzliche Daten zu übertragen.

Die Adressenübertragung erfolgt vorzugsweise im Rahmen der Initialisierung des Automatisierungssystems und wird in der in Figur 1 gezeigten Ausführungsform durch den Steuerungsrechner 1, der als Konfigurationsteilnehmer dient, ausgelöst. Es besteht alternativ die Möglichkeit, dass jeder beliebige andere Teilnehmer im Ringbussystem die Adressenübertragung veranlasst. Es besteht auch die Möglichkeit, dass der Konfigurationsteilnehmer zugleich auch selbst an der Adressenübertragung teilnimmt. Der Steuerungsrechner 1 lässt auf dem in Fig. 1 gezeigten Busklemmensystem nacheinander drei Initialisierungstelegramme umlaufen, mit denen die Sicherheitsadressen der sicherheitsrelevanten Slave-Teilnehmer zuverlässig und unverfälscht zu den zugehörigen Sicherheitsmastern übertragen werden. Die drei Initialisierungstelegramme weisen jeweils einen Kopfbereich, eine Abfolge von Telegrammfeldern, wobei die Anzahl der Telegrammfelder der Anzahl der sicherheitsrelevanten Teilnehmer, d. h. sowohl der sicherheitsrelevanten Slave-Teilnehmer als auch der Sicherheitsmaster, die den Adressenaustausch durchführen soll, entspricht, und einen Endbereich auf. Der Kopfbereich enthält vorzugsweise eine Telegrammkennung HDR, um die drei Initialisierungstelegramme voneinander unterscheiden zu können. Der Endbereich enthält ein Prüffeld CRC, in das ein Prüfzeichen eingetragen werden kann, das aus den übrigen Daten im Telegramm berechnet wird.

Figur 1 zeigt das erste Initialisierungstelegramm 10, das vom Steuerungsrechner 1 auf den ringförmigen Übertragungsweg 2 ausgegeben wird und nacheinander die Busstationen 21, 22, 23 und die darin enthaltenen Buskoppler bzw. Busklemmen durchläuft. In der gezeigten Ausführungsform nehmen an der Adressenübertragung nur die sicherheitsrelevanten Slave-Teilnehmer bzw. Sicherheitsmaster des ersten und zweiten Sicherheitsbereiches teil. Zielsetzung ist es dabei, dem Sicherheitsmaster SLV3 des ersten Sicherheitskreises die Adressen der zu diesem ersten Sicherheitskreis gehörenden sicherheitsrelevanten Slaves SLV1, SLV2, SLV4 und SLV5 zu übermitteln, dem Sicherheitsmaster SLV6 des zweiten Sicherheitskreises die Adressen der sicherheitsrelevanten Slave-Teilnehmer SLV 7, SLV 8.

Das erste Initialisierungstelegramm 10 enthält im Datenblock für jeden Teilnehmer, der an der Adressenübertragung teilnimmt, also für alle sicherheitsrelevante Slave-Teilnehmer und Sicherheitsmaster in der in Figur 1 gezeigten Ausführungsform ein Telegrammfeld. Die Länge des dem Teilnehmer zugeordneten Telegrammfeldes kann dabei auf die Größe der jeweiligen Teilnehmeradresse abgestimmt sein. Das Telegrammfeld kann aber auch eine feste Länge aufweisen, wobei die Anzahl der Stellen des Telegrammfeldes einer maximalen Adressenlänge entspricht. Die Teilnehmerfelder sind bei der Ausgabe des ersten Initialisierungstelegramms 10 auf den ringförmigen Übertragungsweg durch den Steuerungsrechner 1 leer. Leer kann dabei auch bedeuten, dass die Stellen der Teilnehmerfelder mit einem festen Wert, z. B. einer digitalen 0, belegt sind. Das erste Initialisierungstelegramm 10 weist ferner in seinem Kopfbereich eine Telegrammkennung HDR auf. Diese Telegrammkennung wird vom Steuerungsrechner 1 vorgegeben, indem z. B. in einem zugeordneten Telegrammkennfeld ein Startwert, z. B. eine digitale 1, gesetzt ist. In einem Prüffeld CRC im Endbereich des ersten Initialisierungstelegramms 10 trägt der Steuerungsrechner 1 einen Prüfwert für das Telegramm ein, der z. B. mit dem zyklischen Redundanzprüfverfahren, das auch als CRC-Verfahren bekannt ist, berechnet wird. Es besteht jedoch die Möglichkeit, auch andere Verifikationsverfahren zur Bestimmung eines Prüfwertes einzusetzen.

Das vom Steuerungsrechner 1 ausgegebene erste Initialisierungstelegramm 10 durchläuft nacheinander alle am ringförmigen Übertragungsweg angeordneten Teilnehmer, d. h. die Buskoppler und Busklemmen der Busstationen 21, 22, 23, wobei die für die Adressenübertragung vorgesehenen Teilnehmer, d. h. die Sicherheitsmaster SLV3, SLV6 und die sicherheitsrelevanten Slave-Teilnehmer SLV1, SLV2, SLV4, SLV5, SLV7, SLV8, in die den jeweiligen Teilnehmern zugeordneten Teilnehmerfeldern ihre Adressen, die bevorzugt die Serienkennung des Teilnehmers ist, eintragen. Die Teilnehmer prüfen beim Durchlauf, ob das dem Teilnehmer zugeordnete Teilnehmerkennungsfeld frei ist. Bei Feststellen eines freien Teilnehmerkennungsfeldes wird dann die Adresse eingetragen. Wenn festgestellt wird, dass das Teilnehmerfeld nicht frei ist, wird dagegen eine Fehlerkennung eingetragen. Diese Fehlerkennung kann ein fest vorgegebener Fehlerwert sein. Es besteht jedoch auch die Möglichkeit, dass als Fehlerkennung das Teilnehmerkennfeld vom Teilnehmer einfach leer gelassen wird, bzw. der vom Steuerungsrechner 1 vorgegebene ursprüngliche Füllwert im Teilnehmerfeld beibehalten oder nochmals eingeschrieben wird. Nach Eintragung der Adresse bzw. der Fehlerkennung berechnet der Teilnehmer den Prüfwert mit demselben Verifikationsverfahren, das auch der Steuerungsrechner 1 hat, neu und trägt den berechneten Prüfwert ins Prüffeld im Endbereich des ersten Initialisierungstelegramms 10 ein.

Jeder Teilnehmer, der an der Adressenübertragung teilnimmt, besitzt eine Information über die jeweilige Position des Teilnehmers am ringförmigen Übertragungsweg bezogen auf die weiteren Teilnehmer, die sich an der Adressenübertragung beteiligen, sowie die Telegrammumlaufrichtung. Bei der in Figur 1 gezeigten Ausführungsform weiß der sicherheitsrelevante Slave-Teilnehmer SLV1, dass er an der ersten Position, der sicherheitsrelevante Slave-Teilnehmer SLV2, dass er an der zweiten Position, der Sicherheitsmaster SLV3, dass er an der dritten Position, der sicherheitsrelevante Slave-Teilnehmer SLV4, dass er an der vierten Position, der sicherheitsrelevante Slave-Teilnehmer SLV5, dass er an der fünften Position, der Sicherheitsmaster SLV6, dass er an der sechsten Position, der sicherheitsrelevante Slave-Teilnehmer SLV7, dass er an der siebten Position, und der sicherheitsrelevante Slave-Teilnehmer SLV8, dass er an der achten Position steht. Diese Positionsinformation kann den Teilnehmern vor dem Initialisierungsvorgang mit einem dem ersten Intitialisierungstelegramm vorausgehenden Telegramm vom Steuerungsrechner 1 übermittelt werden. Die Positionsinformation kann jedoch auch im Kopfbereich des ersten Initialisierungstelegramms 10 in einem speziell dafür vorgesehenen Telegrammfeld enthalten sein. Weiterhin besteht die Möglichkeit, dass die Positionsinformation direkt in die einzelnen Teilnehmer eingespeichert wird.

Zusätzlich zum Prüfvorgang, ob das dem Teilnehmer zugeordnete Teilnehmerkennfeld frei ist, prüft jeder Teilnehmer beim Durchlauf des ersten Initialisierungstelegramms 10 weiter, ob vor dem dem Teilnehmer zugeordneten Teilnehmerkennfeld angeordnete Teilnehmerkennfelder jeweils eine Adresse enthalten und ob nach dem dem Teilnehmer zugeordneten Teilnehmerkennfeld angeordnete Teilnehmerkennfelder frei sind. Beim Feststellen eines Fehlers trägt der Teilnehmer dann die Fehlerkennung in das dem Teilnehmer zugeordnete Teilnehmerkennfeld des ersten Initialisierungstelegramms 10 ein.

Die Prüfvorgänge können dabei von den Teilnehmern so ausgeführt werden, dass der Teilnehmer das umlaufende Telegramm komplett in seinen lokalen Speicher einliest und dann das Telegramm auswertet und anschließend die Eintragung im Telegramm, d. h. die Eintragung der Adresse bzw. der Fehlerkennung bzw. des Prüfwerts, vornimmt. Die Sicherheitsmaster SLV3, SLV6 in Figur 1 sind ferner so ausgelegt, dass sie die Teilnehmerkennfelder der drei Initialisierungstelegramme vollständig auslesen und mit der in den Sicherheitsmastern abgespeicherten Liste von Adressen der zugeordneten sicherheitsrelevanten Slave-Teilnehmer vergleichen, mit denen kommuniziert werden soll. Die Sicherheitsmaster lesen dabei auch das ihnen zugeordnete eigene Telegrammkennungsfeld mit aus und übermitteln den Inhalt dem im Sicherheitsmaster eingespeicherten Sicherheitsprogramm, in dem wiederum die Adresse des zugeordneten Sicherheitsmasters gespeichert ist.

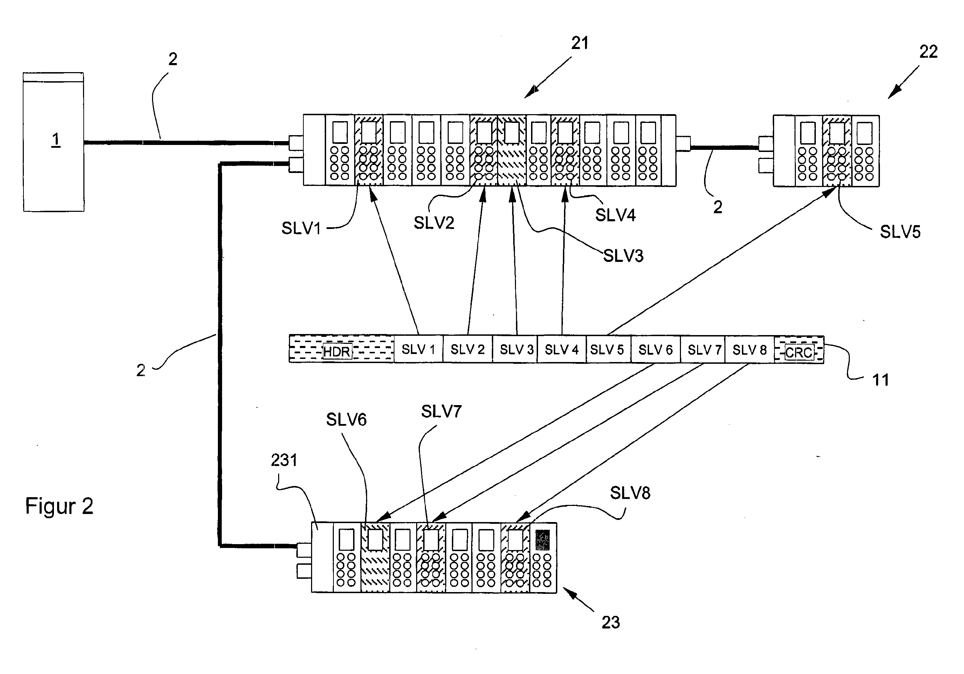

Durch das erste Initialisierungstelegramm 10 erhält der Sicherheitsmaster SLV3 des ersten Sicherheitsbereiches die Adressen der ihm zugeordneten, im Übertragungsweg vor ihm angeordneten sicherheitsrelevanten Slave-Teilnehmer SLV1, SLV2. Die Adressen der ihm ebenfalls zugeordneten sicherheitsrelevanten Slave-Teilnehmer SLV4, SLV5 erhält er dagegen mit dem ersten Initialisierungstelegramm 10 nicht. Dies gilt auch für den Sicherheitsmaster SLV6 des zweiten Sicherheitsbereiches, der die Adressen der ihm nachgeordneten sicherheitsrelevanten Slave-Teilnehmer SLV7, SLV8 mit dem ersten Initialisierungstelegramm 10 nicht erhält. Um eine vollständige Adressenübertragung durchzuführen, wird deshalb das erste Initialisierungstelegramm nach vollständigem Umlauf auf dem Übertragungsweg 2 vom Steuerungsrechner 1 als zweites Initialisierungstelegramm 11, wie in Figur 2 gezeigt, nochmals auf den Übertragungsweg 2 ausgegeben. Das zweite Initialisierungstelegramm 11 ist analog zum ersten Initialisierungstelegramm 10 aufgebaut und enthält die Teilnehmerkennungsfelder des ersten Initialisierungstelegramms 10 nach dem Umlauf auf dem ringförmigen Übertragungsweg 2. Im Kopfbereich trägt der Steuerungsrechner 1 eine Telegrammkennung HDR für das zweite Initialisierungstelegramm 11 ein. Diese Telegrammkennung kann der Steuerungsrechner z. B. durch Hochzählen der Telegrammkennung des ersten Initialisierungstelegramms 10 bestimmen. Es besteht auch die Möglichkeit, dass der Steuerungsrechner 1 als Telegrammkennung für das zweite Initialisierungstelegramm 11 den Prüfwert des ersten Initialisierungstelegramms 10 gegebenenfalls addiert zur Telegrammkennung des ersten Initialisierungstelegramms 10 verwendet. Der Steuerungsrechner 1 führt außerdem eine Prüfwertberechnung durch und trägt das Ergebnis in das Prüffeld CRC im Endbereich des zweiten Initialisierungstelegramms 11 ein.

Beim Umlauf des zweiten Initialisierungstelegramms 11 auf dem ringförmigen Übertragungsweg 2 prüft jeder Teilnehmer beim Durchlauf, ob das dem Teilnehmer zugeordnete Teilnehmerkennfeld seine Adresse enthält. Bei Feststellen eines Fehlers trägt der Teilnehmer analog zur Vorgehensweise beim ersten Initialisierungstelegramm 10 eine Fehlerkennung in das dem Teilnehmer zugeordnete Teilnehmerkennungsfeld des zweiten Initialisierungstelegramms 11 ein. Nach dem Durchführen einer Eintragung berechnet der Teilnehmer dann auch den Prüfwert für das zweite Initialisierungstelegramm 11 neu und trägt das Ergebnis in das Prüffeld im Endbereich des zweiten Initialisierungstelegramms 11 ein.

Die Sicherheitsmaster SLV3, SLV6 verarbeiten das zweite Initialisierungstelegramm 11 analog zum ersten Initialisierungstelegramm 10, d. h. sie lesen die Teilnehmerkennungsfelder aus und vergleichen die ausgelesenen Adressen mit der vorgegebenen Liste der zugeordneten Kommunikationsteilnehmer. Mit dem zweiten Initialisierungstelegramm 11 erhalten die beiden Sicherheitsmaster SLV3, SLV6 so die noch nicht mit dem ersten Initialisierungstelegramm 10 übertragenen Adressen der ihnen im Übertragungsweg jeweils nachgeordneten sicherheitsrelevanten Slave-Teilnehmer, d. h. der erste Sicherheitsmaster SLV3 die Adressen der sicherheitsrelevanten Slave-Teilnehmer SLV4, SLV5 und der zweite Sicherheitsmaster SLV6 die Adressen der sicherheitsrelevanten Slave-Teilnehmer SLV7, SLV8. Mit dem umlaufenden zweiten Initialisierungstelegramm 11 erhalten die beiden Sicherheitsmaster SLV3, SLV6 jedoch keine Information darüber, ob die ihnen nachgeordneten sicherheitsrelevanten Slave-Teilnehmer bei der Überprüfung des ihnen zugeordneten Teilnehmerkennungsfeldes festgestellt haben, dass eine Fehleintragung vorliegt, die die Teilnehmer dann mit der Eintragung einer Fehlerkennung in das zweite Initialisierungstelegramm 11 angezeigt haben.

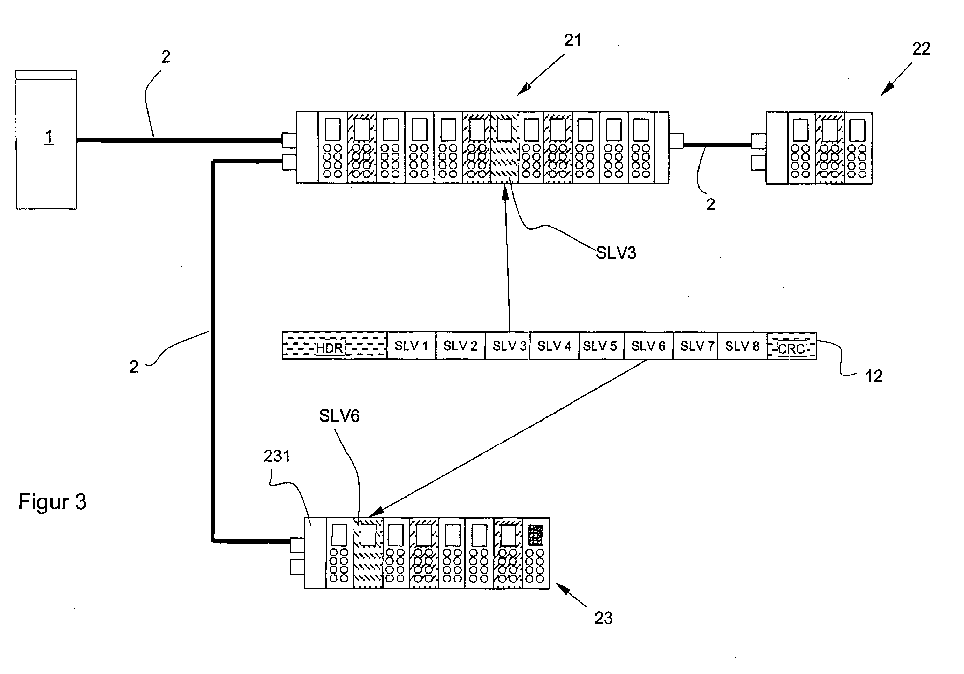

Um auch diese Information zu den Sicherheitsmastern SLV3, SLV6 zu übertragen, gibt, wie Figur 3 zeigt, der Steuerungsrechner 1 ein drittes Initialisierungstelegramm 12 auf dem ringförmigen Übertragungsweg 2 aus, das die Telegrammfelder des zweiten Initialisierungstelegramms 11 nach dem Umlauf auf dem ringförmigen Übertragungsweg 2 enthält. Gleichzeitig trägt der Steuerungsrechner 1 im Kopfbereich des dritten Initialisierungstelegramms 12 die dem dritten Initialisierungstelegramm zugeordnete Teilnehmerkennung HDR ein, wobei er die Telegrammkennung analog zur Telegrammkennung im zweiten Initialisierungstelegramm bestimmt. Auch wird vom Steuerungsrechner 1 vorzugsweise eine neue Berechnung des Prüfwertes im Prüffeld CRC im Endbereich des dritten Initialisierungstelegramms 12 vorgenommen. Das dritte Initialisierungstelegramm 12 wird beim Durchlauf dann von den Sicherheitsmastern SLV3, SLV6 eingelesen und ausgewertet, um festzustellen, ob die ihnen nachgeordneten sicherheitsrelevanten Slave-Teilnehmer SLV4, SLV5 bzw. SLV7, SLV8 eine Fehlereintragung vorgenommen haben.

Mit der vorgestellten Vorgehensweise bei der Adressenübertragung kann auf einfache Weise sicher und zuverlässig eine Adressenübertragung insbesondere auch im Rahmen einer Sicherheitssteuerung in einem Automatisierungsnetzwerk vorgenommen werden. Die ersten beiden Initialisierungstelegramme, die vom Konfigurationsteilnehmer auf den ringförmigen Übertragungsweg ausgegeben werden, sorgen zuverlässig dafür, dass die Teilnehmerkennung zu den am Teilnehmerkennungsaustausch beteiligten Teilnehmern, in der in Figur 1 bis 3 gezeigten Ausführungsform insbesondere zu den Sicherheitsmastern SLV3, SLV6, übertragen werden. Mit dem zusätzlichen dritten Telegramm wird dann auch gewährleistet, dass nicht nur die Teilnehmerkennungen, sondern auch die von den Teilnehmern in die Initialisierungstelegramme eingetragenen Fehlerkennungen zu den Teilnehmern am ringförmigen Übertragungsnetz, insbesondere zu den Master-Teilnehmern, übertragen werden.

Die Master-Teilnehmer können nach Auswertung der Initialisierungstelegramme entscheiden, ob sie das zugeordnete Steuerprogramm ausführen. Die Master-Teilnehmer können diese Entscheidung bereits auf der Grundlage der ersten beiden Initialisierungstelegramme treffen, z. B. dann wenn sie nicht alle Teilnehmerkennungen übermittelt bekommen haben, die in der in den Master-Teilnehmer jeweils eingespeicherten Liste von Teilnehmerkennungen enthalten sind. Die Master-Teilnehmer können jedoch diese Entscheidung auch davon abhängig machen, ob dann, wenn drei Initialisierungstelegramme umlaufen, Fehlerkennungen übertragen wurden. Bei einer Sicherheitssteuerung können die Master-Teilnehmer, in der in Figur 1 bis 3 gezeigten Ausführüngsform die Sicherheitsmaster SLV3, SLV6, dann die zugeordneten sicherheitsrelevanten Slave-Teilnehmer in einen sicheren Zustand gemäß dem Fail-Safe-Prinzip bringen.

Alternativ zu der in Figur 1 bis 3 gezeigten Ausführungsform, bei der drei Initialisierungstelegramme eingesetzt werden, um neben den Teilnehmerkennungen zuverlässig auch die Fehlerkennungen zu übertragen, besteht auch die Möglichkeit, vier Initialisierungstelegramme für diese Teilnehmerkennungs- bzw. Fehlerkennungsübertragung einzusetzen. Bei dieser Ausführungsform tragen die für die Adressenübertragung vorgesehenen Teilnehmer, bei der in Figur 1 bis 3 gezeigten Ausführungsform die Sicherheitsmaster SLV3, SLV6 und die sicherheitsrelevanten Slave-Teilnehmer SLV1, SLV2, SLV4, SLV5, SLV7, SLV8, ihre Fehlerkennungen nicht bereits in das umlaufende Initialisierungstelegramm, sondern erst in das nachfolgende Initialisierungstelegramm ein.

Bezogen auf das erste auf dem Übertragungsweg umlaufende Initialisierungstelegramm bedeutet dies, dass jeder Teilnehmer beim Durchlauf des Initialisierungstelegramms prüft, ob das dem Teilnehmer zugeordnete Teilnehmerkennungsfeld frei ist, um bei Feststellen eines freien Teilnehmerkennungsfeldes dann seine Teilnehmerkennung einzutragen. Bei Feststellen eines belegten Teilnehmerkennungsfeldes merkt der Teilnehmer sich dies und trägt dann eine Fehlerkennung erst in das zweite umlaufende Initialisierungstelegramm ein. Zugleich prüft jeder Teilnehmer beim Durchlauf des zweiten Initialisierungstelegramms, ob das dem Teilnehmer zugeordnete Teilnehmerkennungsfeld seine Teilnehmerkennung enthält. Bei Feststellen eines Fehlers wiederum speichert der Teilnehmer dies ab und schreibt eine Fehlerkennung in das dritte umlaufende Initialisierungstelegramm ein. Das dritte Initialisierungstelegramm wird dann nochmals als viertes Initialisierungstelegramm vom Konfigurationsteilnehmer, bei der in Figur 1 bis 3 gezeigten Ausführungsform vom Steuerungsrechner 1, auf dem Übertragungsweg ausgegeben, um zu gewährleisten, dass auch alle Teilnehmer über die in das dritte Initialisierungstelegramm eingetragenen Fehlerkennungen informiert werden. Bei der in Figur 1 bis 3 gezeigten Ausführungsform überträgt das vierte Initialisierungstelegramm auf die Sicherheitsmaster SLV3, SLV6 insbesondere eine mögliche Eintragung von Fehlerkennungen der ihnen nachgeordneten Slave-Teilnehmer SLV4, SLV5 bzw. SLV7, SLV8.

Bei einer Ausführungsform mit vier Initialisierungstelegrammen entsprechen die ersten drei Initialisierungstelegramme den Initialisierungstelegrammen, wie sie in Zusammenhang mit den in Figur 1 bis 3 gezeigten Ausführungsformen erläutert sind. Im Unterschied zu diesen Initialisierungstelegrammen wird aber eine mögliche Fehlerkennung von den am Adressenaustausch beteiligten Teilnehmern immer erst im nachfolgenden Telegramm eingeschrieben. Im Gegensatz zu der in Figur 1 bis 3 gezeigten Ausführungsform besteht deshalb beim dritten Initialisierungstelegramm auch die Möglichkeit eines Schreibzugriffs insbesondere durch die Slave-Teilnehmer SLV1, SLV2, SLV4, SLV5, SLV6, SLV7, um Fehlereintragungen vorzunehmen. Das vierte Initialisierungstelegramm enthält dann das dritte Initialisierungstelegramm nach dem Umlauf auf dem ringförmigen Übertragungsweg 2, wobei der Steuerungsrechner 1 im Kopfbereich des vierten Initialisierungstelegramms eine dem vierten Initialisierungstelegramm zugeordnete Teilnehmerkennung HDR einträgt, analog zur Vorgehensweise bei den anderen Initialisierungstelegrammen. Auch wird beim vierten Initialisierungstelegramm vom Steuerungsrechner 1 vorzugsweise eine Neuberechnung des Prüfwerts im Prüffeld CRC im Endbereich des vierten Initialisierungstelegramms vorgenommen. Das vierte Initialisierungstelegramm wird beim Durchlauf dann von den Sicherheitsmastern SLV3, SLV6 eingelesen und ausgewertet, um auch von den ihnen nachgeordneten Slave-Teilnehmern SLV4, SLV5, bzw. SLV7, SLV8 eingetragene Fehlerkennungen zu erfassen und dann darauf in oben dargestellter Weise zu reagieren.

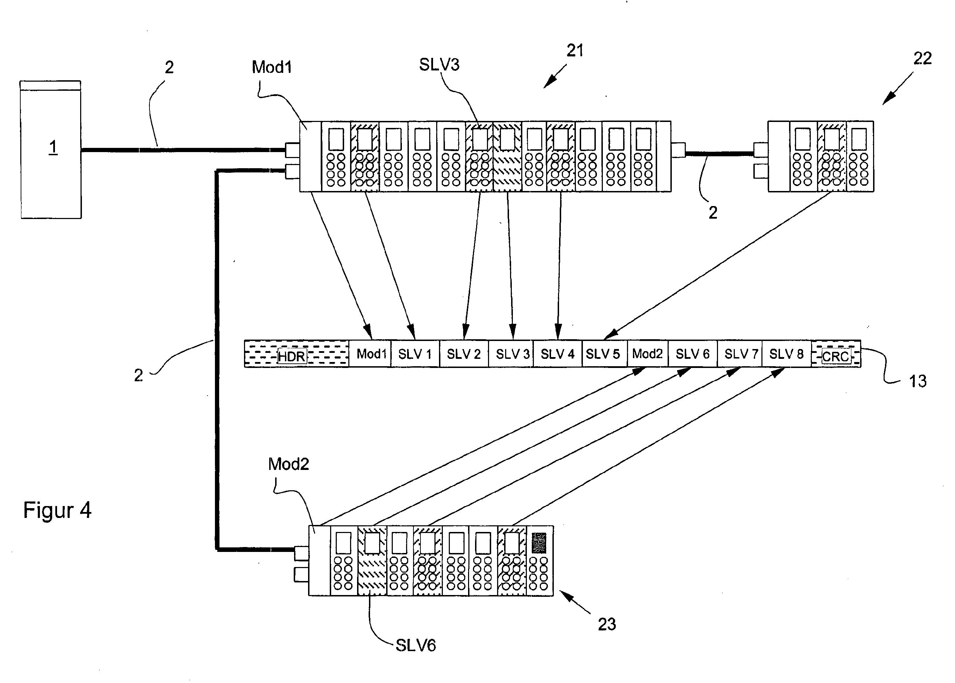

Die dargestellte Vorgehensweise eignet sich jedoch nicht nur zur Übertragung von Adressen, sondern auch zur sicheren Übertragung beliebiger Einstellwerte auf dem ringförmigen Übertragungsweg. Figur 4 zeigt eine Ausführungsform, bei der zusätzlich zu den Adressen Einstellwerte zu den Sicherheitsmastern SLV3, SLV6 übertragen werden. Hierzu sind in den Initialisierungstelegrammen - Figur 4 zeigt ein erstes modifiziertes Initialisierungstelegramm 13 - zusätzlich Einstellwertfelder vorgesehen, in denen zugeordnete Einstelleinrichtungen dann jeweils Einstellwerte eintragen können, analog zur Vorgehensweise bei der Adresseneintragung. Die Einstelleinrichtungen sind dabei über ihre Position am Übertragungsweg 2 bezogen auf die am Übertragungsvorgang beteiligten Teilnehmer und die Telegrammumlaufrichtung informiert.

Bei der in Figur 4 gezeigten Ausführungsform sind als Einstelleinrichtungen, die zusätzlich Einstellwerte in die Initialisierungstelegramme eintragen sollen, der Buskoppler MOD 1 der ersten Busstation 21 und der Buskoppler MOD 2 der dritten Busstation 23 vorgesehen. Der vom Buskoppler MOD 1 eingetragene Einstellwert wird zum Sicherheitsmaster SLV3 des ersten Sicherheitsbereichs, der vom Buskoppler MOD 2 eingetragene Einstellwert zum Sicherheitsmaster SLV6 des zweiten Sicherheitsbereiches übertragen. Die Einstellwerte können z. B. dazu dienen, das vom jeweiligen Sicherheitsmaster auszuwählende Sicherheitsprogramm zu spezifizieren. Die Sicherheitsmaster können z. B. ein Standardsicherheitsprogramm mit verschiedenen vorgegebenen Auslegungen aufweisen, wobei die jeweilige Auslegung dann mit Hilfe des übertragenen Einstellwerts aktiviert wird.

## Patentansprüche

1. Verfahren zum Abfragen von Teilnehmerkennungen in einem Kommunikationsnetzwerk mit mehreren Teilnehmern (SLV1-SLV8), die an einen ringförmigen Übertragungsweg (2) angeschlossen sind,
wobei ein erstes Telegramm (10) auf den ringförmigen Übertragungsweg ausgegeben wird, das eine Abfolge von Telegrammfeldern (SLV1-SLV8) aufweist, wobei jedem Teilnehmer ein Telegrammfeld zum Eintragen seiner Teilnehmerkennung zugeordnet ist,
**dadurch gekennzeichnet, dass**
jeder Teilnehmer beim Durchlauf des ersten Telegramms prüft,
ob das dem Teilnehmer zugeordnete Teilnehmerkennungsfeld frei ist, und nur bei Feststellen eines freien Teilnehmerkennungsfeldes seine Teilnehmerkennung einträgt, und
wobei ein zweites Telegramm (11) auf den ringförmigen Übertragungsweg ausgegeben wird, das die Teilnehmerkennungsfelder des ersten Telegramms nach dem Umlauf auf dem ringförmigen Übertragungsweg enthält.

2. Verfahren nach Anspruch 1, **dadurch gekennzeichnet, dass** jeder Teilnehmer bei Feststellen eines belegten Teilnehmerkennungsfeldes im ersten Telegramm eine Fehlerkennung in das dem Teilnehmer zugeordnete Teilnehmerkennungsfeld des ersten Telegramms oder des zweiten Telegramms einträgt.

3. Verfahren nach Anspruch 1 oder 2,
**dadurch gekennzeichnet, dass** wenigstens einer der Teilnehmer eine Liste von Teilnehmerkennungen aufweist,
wobei jeder Teilnehmer bei Feststellen eines belegten Teilnehmerkennungsfeldes im ersten Telegramm eine Fehlerkennung in das dem Teilnehmer zugeordnete Teilnehmerkennungsfeld des ersten Telegramms einträgt,
wobei jeder Teilnehmer beim Durchlauf des zweiten Telegramms prüft, ob das dem Teilnehmer zugeordnete Teilnehmerkennungsfeld seine Teilnehmerkennung enthält, und bei Feststellen eines Fehlers eine Fehlerkennung in das dem Teilnehmer zugeordnete Teilnehmerkennungsfeld des zweiten Telegramms einträgt,
und
wobei ein drittes Telegramm auf den ringförmigen Übertragungsweg ausgeben wird, das die Telegrammfelder des zweiten Telegramms nach dem Umlauf auf dem ringförmigen Übertragungs-weg enthält, wobei der eine Liste von Teilnehmerkennungen aufweisende Teilnehmer beim Durchlauf des dritten Telegramms die im dritten Telegramm enthaltenen Teilnehmerkennungsfelder einliest und mit der Liste von Teilnehmerkennungen vergleicht.

4. Verfahren nach Anspruch 3, **dadurch gekennzeichnet, dass** jeder Teilnehmer beim Durchlauf des ersten Telegramms weiter prüft, ob vor dem dem Teilnehmer zugeordneten Teilnehmerkennungsfeld angeordnete Teilnehmerkennungsfelder jeweils eine Teilnehmerkennung enthalten und ob nach dem dem Teilnehmer zugeordneten Teilnehmerkennungsfeld angeordnete Teilnehmerkennungsfelder frei sind, und bei Feststellen eines Fehlers eine Fehlerkennung in das dem Teilnehmer zugeordnete Teilnehmerkennungsfeld des ersten Telegramms einträgt.

5. Verfahren nach Anspruch 1 oder 2,
**dadurch gekennzeichnet, dass** wenigstens einer der Teilnehmer eine Liste von Teilnehmerkennungen aufweist,
wobei jeder Teilnehmer bei Feststellen eines belegten Teilnehmerkennungsfeldes im ersten Telegramm beim Durchlauf des zweiten Telegramms eine Fehlerkennung in das dem Teilnehmer zugeordnete Teilnehmerkennungsfeld des zweiten Telegramms einträgt und prüft, ob das dem Teilnehmer zugeordnete Teilnehmerkennungsfeld seine Teilnehmerkennung enthält,
wobei ein drittes Telegramm auf den ringförmigen Übertragungsweg ausgeben wird, das die Telegrammfelder des zweiten Telegramms nach dem Umlauf auf dem ringförmigen Übertragungsweg enthält, wobei jeder Teilnehmer bei Feststellen eines Fehlers im zweiten Telegramm beim Durchlauf des dritten Telegramms eine Fehlerkennung in das dem Teilnehmer zugeordnete Teilnehmerkennungsfeld des dritten Telegramms einträgt, und wobei ein viertes Telegramm auf den ringförmigen Übertragungsweg ausgegeben wird, das die Telegrammfelder des dritten Telegramms nach dem Umlauf auf dem ringförmigen Übertragungsweg enthält, wobei der eine Liste von Teilnehmerkennungen aufweisende Teilnehmer beim Durchlauf des vierten Telegramms die im vierten Telegramm enthaltenen Teilnehmerkennungsfelder einliest und mit der Liste von Teilnehmerkennungen vergleicht.

6. Verfahren nach Anspruch 5,
**dadurch gekennzeichnet, dass** jeder Teilnehmer beim Durchlauf des ersten Telegramms weiter prüft, ob vor dem dem Teilnehmer zugeordneten Teilnehmerkennungsfeld angeordnete Teilnehmerkennungsfelder jeweils eine Teilnehmerkennung enthalten und ob nach dem dem Teilnehmer zugeordneten Teilnehmerkennungsfeld angeordnete Teilnehmerkennungsfelder frei sind, und wobei jeder Teilnehmer bei Feststellen eines Fehlers im ersten Telegramm eine Fehlerkennung in das dem Teilnehmer zugeordnete Teilnehmerkennungsfeld des zweiten Telegramms einträgt.

7. Verfahren nach einem der Ansprüche 1 bis 6, **dadurch gekennzeichnet, dass** jeder Teilnehmer eine Information über seine Position am ringförmigen Übertragungsweg bezogen auf die weiteren Teilnehmer und die Telegrammumlaufrichtung erhält, wobei die Information über die jeweilige Position der Teilnehmer am ringförmigen Übertragungsweg vorzugsweise mit einem dem ersten Telegramm vorausgehenden Telegramm oder mit einem Kopfbereich des ersten Telegramms übertragen wird.

8. Verfahren nach einem der Ansprüche 1 bis 7, **dadurch gekennzeichnet, dass** die auf den ringförmigen Übertragungsweg ausgegebenen Telegramme jeweils ein Prüfwertfeld aufweisen, wobei die Teilnehmer beim Eintragen der Teilnehmerkennung bzw. der Fehlerkennung eine Berechnung eines Prüfwerts für das Telegramm durchführen und in das Prüfwertfeld eintragen.

9. Verfahren nach einem der Ansprüche 1 bis 8, **dadurch gekennzeichnet, dass** wenigstens ein Teilnehmer am ringförmigen Übertragungsweg eine Einstelleinrichtung ist und einen Einstellwert als Teilnehmerkennung in das dem Teilnehmer zugeordnete Teilnehmerkennungsfeld des ersten Telegramms einträgt.

10. Kommunikationsnetzwerk mit
mehreren Teilnehmern (SLV1-SLV8), die an einen ringförmigen Übertragungsweg (2) angeschlossen sind, und
mit einem Konfigurationsteilnehmer (1),
wobei der Konfigurationsteilnehmer ausgelegt ist,
beim Initialisieren des Kommunikationsnetzwerkes ein erstes Telegramm (10) auf den ringförmigen Übertragungsweg auszugeben,
das eine Abfolge von Telegrammfeldern (SLV1-SLV8) aufweist, wobei jedem Teilnehmer ein Telegrammfeld zum Eintragen seiner Teilnehmerkennung zugeordnet ist,
**dadurch gekennzeichnet, dass**
jeder Teilnehmer ausgelegt ist, beim Durchlauf des ersten Telegramms zu prüfen, ob das dem Teilnehmer zugeordnete Teilnehmerkennungsfeld frei ist, und nur bei Feststellen eines freien Teilnehmerkennungsfeldes seine Teilnehmerkennung einträgt, und wobei der Konfigurationsteilnehmer weiter ausgelegt ist, ein zweites Telegramm (11) auf den ringförmigen Übertragungsweg auszugeben, das die Teilnehmerkennungsfelder des ersten Telegramms nach dem Umlauf auf dem ringförmigen Übertragungsweg enthält.

11. Kommunikationsnetzwerk nach Anspruch 10, **dadurch gekennzeichnet, dass** jeder Teilnehmer ausgelegt ist, bei Feststellen eines belegten Teilnehmerkennungsfeldes im ersten Telegramm eine Fehlerkennung in das dem Teilnehmer zugeordnete Teilnehmerkennungsfeld des ersten Telegramms oder des zweiten Telegramms einzutragen.

12. Kommunikationsnetzwerk nach Anspruch 10 oder 11,
**dadurch gekennzeichnet, dass** wenigstens einer der Teilnehmer eine Liste von Teilnehmerkennungen aufweist,
wobei jeder Teilnehmer bei Feststellen eines belegten Teilnehmerkennungsfeldes im ersten Telegramm eine Fehlerkennung in das dem Teilnehmer zugeordnete Teilnehmerkennungsfeld des ersten Telegramms einträgt,
wobei jeder Teilnehmer beim Durchlauf des zweiten Telegramms prüft, ob das dem Teilnehmer zugeordnete Teilnehmerkennungsfeld seine Teilnehmerkennung enthält, und bei Feststellen eines Fehlers eine Fehlerkennung in das dem Teilnehmer zugeordnete Teilnehmerkennungsfeld des zweiten Telegramms einträgt, und
wobei der Konfigurationsteilnehmer ausgelegt ist, ein drittes Telegramm auf den ringförmigen Übertragungsweg auszugeben, das die Telegrammfelder des zweiten Telegramms nach dem Umlauf auf dem ringförmigen Übertragungsweg enthält, wobei der eine Liste von Teilnehmerkennungen aufweisende Teilnehmer beim Durchlauf des dritten Telegramms die im dritten Telegramm enthaltenen Teilnehmerkennungsfelder einliest und mit der Liste von Teilnehmerkennungen vergleicht.

13. Kommunikationsnetzwerk nach Anspruch 12, **dadurch gekennzeichnet, dass** jeder Teilnehmer ausgelegt ist, beim Durchlauf des ersten Telegramms weiter zu prüfen, ob vor dem dem Teilnehmer zugeordneten Teilnehmerkennungsfeld angeordnete Teilnehmerkennungsfelder jeweils eine Teilnehmerkennung enthalten und ob nach dem dem Teilnehmer zugeordneten Teilnehmerkennungsfeld angeordnete Teilnehmerkennungsfelder frei sind, und bei Feststellen eines Fehlers eine Fehlerkennung in das dem Teilnehmer zugeordnete Teilnehmerkennungsfeld des ersten Telegramms einzutragen.

14. Kommunikationsnetzwerk nach Anspruch 10 oder 11,
**dadurch gekennzeichnet, dass** wenigstens einer der Teilnehmer eine Liste von Teilnehmerkennungen aufweist,
wobei jeder Teilnehmer bei Feststellen eines belegten Teilnehmerkennungsfeldes im ersten Telegramm beim Durchlauf des zweiten Telegramms eine Fehlerkennung in das dem Teilnehmer zugeordnete Teilnehmerkennungsfeld des zweiten Telegramms einträgt und prüft, ob das dem Teilnehmer zugeordnete Teilnehmerkennungsfeld seine Teilnehmerkennung enthält,
wobei der Konfigurationsteilnehmer ausgelegt ist, ein drittes Telegramm auf den ringförmigen Übertragungsweg auszugeben, das die Telegrammfelder des zweiten Telegramms nach dem Umlauf auf dem ringförmigen Übertragungsweg enthält, wobei jeder Teilnehmer bei Feststellen eines Fehlers im zweiten Telegramm beim Durchlauf des dritten Telegramms eine Fehlerkennung in das dem Teilnehmer zugeordnete Teilnehmerkennungsfeld des dritten Telegramms einträgt, und
wobei der Konfigurationsteilnehmer ausgelegt ist, ein viertes Telegramm auf den ringförmigen Übertragungsweg auszugeben, das die Telegrammfelder des dritten Telegramms nach dem Umlauf auf dem ringförmigen Übertragungsweg enthält, wobei der eine Liste von Teilnehmerkennungen aufweisende Teilnehmer beim Durchlauf des vierten Telegramms die im vierten Telegramm enthaltenen Teilnehmerkennungsfelder einliest und mit der Liste von Teilnehmerkennungen vergleicht.

15. Kommunikationsnetzwerk nach Anspruch 14,
**dadurch gekennzeichnet, dass** jeder Teilnehmer beim Durchlauf des ersten Telegramms weiter prüft, ob vor dem dem Teilnehmer zugeordneten Teilnehmerkennungsfeld angeordnete Teilnehmerkennungsfelder jeweils eine Teilnehmerkennung enthalten und ob nach dem dem Teilnehmer zugeordneten Teilnehmerkennungsfeld angeordnete Teilnehmerkennungsfelder frei sind, und wobei jeder Teilnehmer bei Feststellen eines Fehlers im ersten Telegramm eine Fehlerkennung in das dem Teilnehmer zugeordnete Teilnehmerkennungsfeld des zweiten Telegramms einträgt.

16. Kommunikationsnetzwerk nach einem der Ansprüche 12 bis 15, **dadurch gekennzeichnet, dass** der Konfigurationsteilnehmer weiter ausgelegt ist, jedem Teilnehmer eine Information über seine Position am ringförmigen Übertragungsweg bezogen auf die weiteren Teilnehmer und die Telegrammumlaufrichtung zu übermitteln.

17. Kommunikationsnetzwerk nach einem der Ansprüche 10 bis 16, **dadurch gekennzeichnet, dass** wenigstens ein Teilnehmer am ringförmigen Übertragungswege ein Einstelleinrichtung ist, die ausgelegt ist, einen Einstellwert als Teilnehmerkennung in das dem Teilnehmer zugeordnete Teilnehmerkennungsfeld des ersten Telegramms einzutragen.

## Claims

1. Method for querying subscriber identifiers in a communication network having a plurality of subscribers (SLV1-SLV8) which are connected to an annular transmission path (2),
a first message (10) being output onto the annular transmission path, which first message has a sequence of message fields (SLV1-SLV8), each subscriber being assigned a message field for entering its subscriber identifier,
**characterized in that**
each subscriber checks, as the first message passes through, whether the subscriber identifier field assigned to the subscriber is free and enters its subscriber identifier only if a free subscriber identifier field is determined, and
a second message (11) being output onto the annular transmission path, which second message contains the subscriber identifier fields of the first message after circulation on the annular transmission path.

2. Method according to Claim 1, **characterized in that**, upon determining an occupied subscriber identifier field in the first message, each subscriber enters an error identifier in the subscriber identifier field assigned to the subscriber in the first message or in the second message.

3. Method according to Claim 1 or 2,
**characterized in that** at least one of the subscribers has a list of subscriber identifiers,
in which case, upon determining an occupied subscriber identifier field in the first message, each subscriber enters an error identifier in the subscriber identifier field assigned to the subscriber in the first message, each subscriber checking, as the second message passes through, whether the subscriber identifier field assigned to the subscriber contains its subscriber identifier and, upon determining an error, entering an error identifier in the subscriber identifier field assigned to the subscriber in the second message, and
a third message being output onto the annular transmission path, which third message contains the message fields of the second message after circulation on the annular transmission path, the subscriber having a list of subscriber identifiers reading the subscriber identifier fields contained in the third message as the third message passes through and comparing them with the list of subscriber identifiers.

4. Method according to Claim 3, **characterized in that** each subscriber also checks, as the first message passes through, whether subscriber identifier fields arranged in front of the subscriber identifier field assigned to the subscriber each contain a subscriber identifier and whether subscriber identifier fields arranged after the subscriber identifier field assigned to the subscriber are free and, upon determining an error, enters an error identifier in the subscriber identifier field assigned to the subscriber in the first message.

5. Method according to Claim 1 or 2,
**characterized in that** at least one of the subscribers has a list of subscriber identifiers,
in which case, upon determining an occupied subscriber identifier field in the first message, each subscriber enters an error identifier in the subscriber identifier field assigned to the subscriber in the second message as the second message passes through and checks whether the subscriber identifier field assigned to the subscriber contains its subscriber identifier,
a third message being output onto the annular transmission path, which third message contains the message fields of the second message after circulation on the annular transmission path, in which case, upon determining an error in the second message, each subscriber enters an error identifier in the subscriber identifier field assigned to the subscriber in the third message as the third message passes through, and
a fourth message being output onto the annular transmission path, which fourth message contains the message fields of the third message after circulation on the annular transmission path, the subscriber having a list of subscriber identifiers reading the subscriber identifier fields contained in the fourth message as the fourth message passes through and comparing them with the list of subscriber identifiers.

6. Method according to Claim 5,
**characterized in that** each subscriber also checks, as the first message passes through, whether subscriber identifier fields arranged in front of the subscriber identifier field assigned to the subscriber each contain a subscriber identifier and whether subscriber identifier fields arranged after the subscriber identifier field assigned to the subscriber are free, and, upon determining an error in the first message, each subscriber entering an error identifier in the subscriber identifier field assigned to the subscriber in the second message.

7. Method according to one of Claims 1 to 6,
**characterized in that** each subscriber receives an item of information relating to its position on the annular transmission path based on the further subscribers and the message running direction, the information relating to the respective position of the subscribers on the annular transmission path preferably being transmitted using a message which precedes the first message or using a header of the first message.

8. Method according to one of Claims 1 to 7,
**characterized in that** the messages output onto the annular transmission path each have a test value field, the subscribers calculating a test value for the message and entering it in the test value field when entering the subscriber identifier or the error identifier.

9. Method according to one of Claims 1 to 8,
**characterized in that** at least one subscriber on the annular transmission path is an adjustment device and enters an adjustment value as the subscriber identifier in the subscriber identifier field assigned to the subscriber in the first message.

10. Communication network having
a plurality of subscribers (SLV1-SLV8) which are connected to an annular transmission path (2), and having a configuration subscriber (1),
the configuration subscriber being designed to output a first message (10) onto the annular transmission path when initializing the communication network, which first message has a sequence of message fields (SLV1-SLV8), each subscriber being assigned a message field for entering its subscriber identifier, **characterized in that**
each subscriber is designed to check, as the first message passes through, whether the subscriber identifier field assigned to the subscriber is free and enters its subscriber identifier only if a free subscriber identifier field is determined, and the configuration subscriber also being designed to output a second message (11) onto the annular transmission path, which second message contains the subscriber identifier fields of the first message after circulation on the annular transmission path.

11. Communication network according to Claim 10, **characterized in that**, upon determining an occupied subscriber identifier field in the first message, each subscriber is designed to enter an error identifier in the subscriber identifier field assigned to the subscriber in the first message or in the second message.

12. Communication network according to Claim 10 or 11, **characterized in that** at least one of the subscribers has a list of subscriber identifiers,
in which case, upon determining an occupied subscriber identifier field in the first message, each subscriber enters an error identifier in the subscriber identifier field assigned to the subscriber in the first message, each subscriber checking, as the second message passes through, whether the subscriber identifier field assigned to the subscriber contains its subscriber identifier and, upon determining an error, entering an error identifier in the subscriber identifier field assigned to the subscriber in the second message, and the configuration subscriber being designed to output a third message onto the annular transmission path, which third message contains the message fields of the second message after circulation on the annular transmission path, the subscriber having a list of subscriber identifiers reading the subscriber identifier fields contained in the third message as the third message passes through and comparing them with the list of subscriber identifiers.

13. Communication network according to Claim 12, **characterized in that** each subscriber is designed to also check, as the first message passes through, whether subscriber identifier fields arranged in front of the subscriber identifier field assigned to the subscriber each contain a subscriber identifier and whether subscriber identifier fields arranged after the subscriber identifier field assigned to the subscriber are free and, upon determining an error, to enter an error identifier in the subscriber identifier field assigned to the subscriber in the first message.

14. Communication network according to Claim 10 or 11, **characterized in that** at least one of the subscribers has a list of subscriber identifiers,
in which case, upon determining an occupied subscriber identifier field in the first message, each subscriber enters an error identifier in the subscriber identifier field assigned to the subscriber in the second message as the second message passes through and checks whether the subscriber identifier field assigned to the subscriber contains its subscriber identifier,
the configuration subscriber being designed to output a third message onto the annular transmission path, which third message contains the message fields of the second message after circulation on the annular transmission path, in which case, upon determining an error in the second message, each subscriber enters an error identifier in the subscriber identifier field assigned to the subscriber in the third message as the third message passes through, and
the configuration subscriber being designed to output a fourth message onto the annular transmission path, which fourth message contains the message fields of the third message after circulation on the annular transmission path, the subscriber having a list of subscriber identifiers reading the subscriber identifier fields contained in the fourth message as the fourth message passes through and comparing them with the list of subscriber identifiers.

15. Communication network according to Claim 14, **characterized in that** each subscriber also checks, as the first message passes through, whether subscriber identifier fields arranged in front of the subscriber identifier field assigned to the subscriber each contain a subscriber identifier and whether subscriber identifier fields arranged after the subscriber identifier field assigned to the subscriber are free, and, upon determining an error in the first message, each subscriber entering an error identifier in the subscriber identifier field assigned to the subscriber in the second message.

16. Communication network according to one of Claims 12 to 15, **characterized in that** the configuration subscriber is also designed to transmit, to each subscriber, an item of information relating to its position on the annular transmission path based on the further subscribers and the message running direction.

17. Communication network according to one of Claims 10 to 16, **characterized in that** at least one subscriber on the annular transmission path is an adjustment device which is designed to enter an adjustment value as the subscriber identifier in the subscriber identifier field assigned to the subscriber in the first message.

## Revendications

1. Procédé de récupération d'identifiants de participants dans un réseau de communication comportant une pluralité de participants (SLV1-SLV8) raccordés à un trajet de transmission (2) annulaire, dans lequel un premier télégramme (10) est délivré sur le trajet de transmission annulaire, lequel télégramme comprend une série de champs de télégramme (SLV1-SLV8), dans lequel un champ de télégramme est affecté à chaque participant pour inscrire son identifiant de participant,
**caractérisé en ce que**
chaque participant vérifie, lors du passage du premier télégramme, si le champ d'identifiant de participant affecté au participant est libre et n'inscrit son identifiant de participant que lorsqu'il a été établi qu'un champ d'identifiant de participant est libre, et dans lequel un deuxième télégramme (11) est délivré sur le trajet de transmission annulaire, lequel télégramme contient les champs d'identifiants de participants du premier télégramme après son passage sur le trajet de transmission annulaire.

2. Procédé selon la revendication 1, **caractérisé en ce que** chaque participant, lorsqu'il est établi qu'un champ d'identifiant de participant authentique est présent dans le premier télégramme, inscrit une identification de défaut dans le champ d'identifiant de participant affecté au participant dans le premier télégramme ou le deuxième télégramme.

3. Procédé selon la revendication 1 ou 2, **caractérisé en ce qu'**au moins l'un des participants comprend une liste d'identifiants de participants,
dans lequel chaque participant, lorsqu'il est établi qu'un champ d'identifiant de participant authentique est présent dans le premier télégramme, inscrit une identification de défaut dans le champ d'identifiant de participant affecté au participant dans le premier télégramme,
dans lequel chaque participant vérifie, lors du passage du deuxième télégramme, si le champ d'identifiant de participant affecté au participant contient son identifiant de participant et, lorsqu'il est établi qu'un défaut est présent, inscrit une identification de défaut dans le champ d'identifiant de participant affecté au participant dans le deuxième télégramme, et dans lequel un troisième télégramme est délivré sur le trajet de transmission annulaire, lequel télégramme contient les champs de télégramme du deuxième télégramme après son passage sur le trajet de transmission annulaire, dans lequel le participant comprenant une liste d'identifiants de participants lors du passage du troisième télégramme importe les champs d'identifiants de participants contenus dans le troisième télégramme et les compare à la liste d'identifiants de participants.

4. Procédé selon la revendication 3, **caractérisé en ce que** chaque participant vérifie en outre, lors du passage du premier télégramme, si des champs d'identifiants de participants disposés avant le champ d'identifiant de participant affecté au participant contiennent chacun un identifiant de participant et si des champs d'identifiants de participants disposés après le champ d'identifiant de participant affecté au participant sont libres et, lorsqu'il est établi qu'un défaut est présent, inscrit une identification de défaut dans le champ d'identifiant de participant du premier télégramme affecté au participant.

5. Procédé selon la revendication 1 ou 2, **caractérisé en ce qu'**au moins l'un des participants comprend une liste d'identifiants de participants,
dans lequel chaque participant, lorsqu'il est établi qu'un champ d'identifiant de participant authentique est présent dans le premier télégramme lors du passage du deuxième télégramme, inscrit une identification de défaut dans le champ d'identifiant de participant affecté au participant dans le deuxième télégramme et vérifie si le champ d'identifiant de participant affecté au participant contient son identifiant de participant,
dans lequel un troisième télégramme est délivré sur le trajet de transmission annulaire, lequel télégramme contient des champs de télégramme du deuxième télégramme après son passage sur le trajet de transmission annulaire, dans lequel chaque participant, lorsqu'il est établi qu'un défaut est présent dans le deuxième télégramme, lors du passage du troisième télégramme, inscrit une identification de défaut dans le champ d'identifiant de participant affecté au participant dans le troisième télégramme, et dans lequel un quatrième télégramme est délivré sur le trajet de transmission annulaire, lequel télégramme contient les champs de télégramme du troisième télégramme après son passage sur le trajet de transmission annulaire, dans lequel le participant comprenant une liste d'identifiants de participants lors du passage du quatrième télégramme importe les champs d'identifiants de participants contenus dans le quatrième télégramme et les compare à la liste d'identifiants de participants.

6. Procédé selon la revendication 5, **caractérisé en ce que** chaque participant vérifie, lors du passage du premier télégramme, si des champs d'identifiants de participants disposés avant le champ d'identifiant affecté au participant contiennent chacun un identifiant de participant et si des champs d'identifiants de participants disposés après le champ d'identifiant de participant affecté au participant sont libres, et dans lequel chaque participant, lorsqu'il est établi qu'un défaut est présent dans le premier télégramme, inscrit une identification de défaut dans le champ d'identifiant de participant affecté au participant dans le deuxième télégramme.

7. Procédé selon l'une quelconque des revendications 1 à 6, **caractérisé en ce que** chaque participant obtient une information concernant sa position sur le trajet de transmission annulaire par rapport aux autres participants et à la direction de passage des télégrammes, dans lequel l'information concernant la position respective des participants sur le trajet de transmission annulaire est de préférence transmise avec un télégramme précédant le premier télégramme ou avec une zone d'entête du premier télégramme.

8. Procédé selon l'une quelconque des revendications 1 à 7, **caractérisé en ce que** les télégrammes délivrés sur le trajet de transmission annulaire comprennent chacun un champ de valeur de test, dans lequel les participants effectuent un calcul d'une valeur de test pour le télégramme lors de l'inscription de l'identifiant de participant ou de l'identification de défaut et l'inscrivent dans le champ de valeur de test.

9. Procédé selon l'une quelconque des revendications 1 à 8, **caractérisé en ce qu'**au moins un participant au trajet de transmission annulaire est un dispositif de réglage et inscrit une valeur de réglage en tant qu'identifiant de participant dans le champ d'identifiant de participant affecté au participant dans le premier télégramme.

10. Réseau de communication comportant une pluralité de participants (SLV1-SLV8) qui sont raccordés à un trajet de transmission (2) annulaire, et comportant un participant de configuration (1),
dans lequel le participant de configuration est conçu, lors de l'initialisation du réseau de communication, pour délivrer un premier télégramme (10) sur le trajet de transmission annulaire, lequel télégramme comprend une série de champs de télégramme (SLV1-SLV8), dans lequel un champ de télégramme est affecté à chaque participant pour inscrire son identifiant de participant,
**caractérisé en ce que** chaque participant est conçu pour vérifier, lors du passage d'un premier télégramme, si le champ d'identifiant de participant affecté au participant est libre, et n'inscrit son identifiant de participant que lorsqu'il est établi qu'un champ d'identifiant de participant est libre, et dans lequel le participant de configuration est en outre conçu pour délivrer un deuxième télégramme (11) sur le trajet de transmission annulaire, lequel télégramme contient les champs d'identifiants de participants du premier télégramme après son passage sur le trajet de transmission annulaire.

11. Réseau de communication selon la revendication 10, **caractérisé en ce que** chaque participant est conçu pour inscrire, lorsqu'il est établi qu'un champ d'identifiant de participant authentique est présent dans le premier télégramme, une identification de défaut dans le champ d'identifiant de participant affecté au participant dans le premier télégramme ou le deuxième télégramme.

12. Réseau de communication selon la revendication 10 ou 11, **caractérisé en ce qu'**au moins l'un des participants comporte une liste d'identifiants de participants,
dans lequel chaque participant, lorsqu'il est établi qu'un champ d'identifiant de participant authentique est présent dans le premier télégramme, inscrit une identification de défaut dans le champ d'identifiant de participant affecté au participant dans le premier télégramme,
dans lequel chaque participant, lors du passage du deuxième télégramme, vérifie si le champ d'identifiant de participant affecté au participant contient son identifiant de participant et, lorsqu'il est établi qu'un défaut est présent, inscrit une identification de défaut dans le champ d'identifiant de participant affecté au participant dans le deuxième télégramme, et dans lequel le participant de configuration est conçu pour délivrer un troisième télégramme sur le trajet de transmission annulaire, lequel télégramme contient les champs de télégramme du deuxième télégramme après son passage sur le trajet de transmission annulaire, dans lequel le participant comprenant une liste d'identifiants de participants, lors du passage du troisième télégramme, importe les champs d'identifiants de participants contenus dans le troisième télégramme et les compare à la liste d'identifiants de participants.

13. Réseau de communication selon la revendication 12, **caractérisé en ce que** chaque participant est en outre conçu pour vérifier, lors du passage du premier télégramme, si des champs d'identifiants de participants disposés avant le champ d'identifiant de participant affecté au participant contiennent chacun un identifiant de participant et si des champs d'identifiants de participants disposés après le champ d'identifiant de participant affecté au participant sont libres et, lorsqu'il est établi qu'un défaut est présent, pour inscrire une identification de défaut dans le champ d'identifiant de participant affecté au participant dans le premier télégramme.

14. Réseau de communication selon la revendication 10 ou 11, **caractérisé en ce qu'**au moins l'un des participants comprend une liste d'identifiants de participants,
dans lequel chaque participant, lorsqu'il est établi qu'un champ d'identifiant de participant authentique est présent dans le premier télégramme, lors du passage du deuxième télégramme, inscrit une identification de défaut dans le champ d'identifiant de participant affecté au participant dans le deuxième télégramme et vérifie si le champ d'identifiant de participant affecté au participant contient son identifiant de participant,
dans lequel le participant de configuration est conçu pour délivrer un troisième télégramme sur le trajet de transmission annulaire, lequel télégramme contient des champs de télégramme du deuxième télégramme après son passage sur le trajet de transmission annulaire, dans lequel chaque participant, lorsqu'il est établi qu'un défaut est présent dans le deuxième télégramme, lors du passage du troisième télégramme, inscrit une identification de défaut dans le champ d'identifiant de participant affecté au participant dans le troisième télégramme, et
dans lequel le participant de configuration est conçu pour délivrer un quatrième télégramme sur le trajet de transmission annulaire, lequel télégramme contient les champs de télégramme du troisième télégramme après son passage sur le trajet de transmission annulaire, dans lequel le participant comprenant une liste d'identifiants de participants, lors du passage du quatrième télégramme, importe les champs d'identifiants de participants contenus dans le quatrième télégramme et les compare à la liste d'identifiants de participants.

15. Réseau de communication selon la revendication 14, **caractérisé en ce que** chaque participant, lors du passage du premier télégramme, vérifie en outre si des champs d'identifiants de participants disposés avant le champ d'identifiant affecté au participant contiennent chacun un identifiant de participant et si des champs d'identifiants de participants disposés après le champ de participant affecté au participant sont libres, et dans lequel chaque participant, lorsqu'il est établi qu'un défaut est présent dans le premier télégramme, inscrit une identification de défaut dans le champ d'identifiant de participant affecté au participant dans le deuxième télégramme.

16. Réseau de communication selon l'une quelconque des revendications 12 à 15, **caractérisé en ce que** le participant de configuration est en outre conçu pour transmettre à chaque participant une information concernant sa position sur le trajet de transmission annulaire par rapport aux autres participants et à la direction de passage des télégrammes.

17. Réseau de communication selon l'une quelconque des revendications 10 à 16, **caractérisé en ce qu'**au moins un participant au trajet de transmission annulaire est un dispositif de réglage qui est conçu pour inscrire une valeur de réglage en tant qu'identifiant de participant dans le champ d'identifiant de participant affecté au participant dans le premier télégramme.
